(19)

Europäisches
Patentamt
European
Patent Office
Office européen
des brevets

(11)  **EP 4 510 071 A1**

(12)  **EUROPEAN PATENT APPLICATION**
published in accordance with Art. 153(4) EPC

(43) Date of publication:
    **19.02.2025   Bulletin 2025/08**

(21) Application number: **22940210.2**

(22) Date of filing: **28.04.2022**

(51) International Patent Classification (IPC):
    *G06Q 50/30* (2012.01)

(52) Cooperative Patent Classification (CPC):
    **G06Q 50/40**

(86) International application number:
    **PCT/JP2022/019246**

(87) International publication number:
    **WO 2023/209934 (02.11.2023 Gazette 2023/44)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **LOGISTEED, Ltd.**
    **Tokyo 104-0031 (JP)**

(72) Inventor: **HANZAWA, Yasuhiro**
    **Tokyo 104-8350 (JP)**

(74) Representative: **Isern Patentes y Marcas S.L.**
    **Avda. Diagonal, 463 Bis, 2°**
    **08036 Barcelona (ES)**

(54)  **CO2 EMISSION AMOUNT CALCULATION SYSTEM, CO2 EMISSION AMOUNT CALCULATION METHOD, AND PROGRAM**

(57)    [Problem] To provide a $CO_2$ emission amount calculation system, a $CO_2$ emission amount calculation method, and a program with which a logistics-related $CO_2$ emission amount is calculated accurately for shippers. [Solution] A $CO_2$ emission amount calculation system 1 for calculating a logistics-related $CO_2$ emission amount, the system comprising: a first calculation unit 11 that calculates a $CO_2$ emission amount on the basis of costs of transporting materials used for logistics; and an identifying unit 15 that identifies a shipper that caused the calculated $CO_2$ emission amount. The $CO_2$ emission amount calculation system 1 further comprises: a second calculation unit that calculates a $CO_2$ emission amount on the basis of energy to be consumed by transporting cargo; a third calculation unit that calculates a $CO_2$ emission amount on the basis of energy to be consumed by moving the cargo within warehouse premises; and a fourth calculation unit that calculates a $CO_2$ emission amount on the basis of energy to be consumed by managing the cargo within the warehouse premises.

FIG. 1

## Description

### Technical field

The present disclosure relates to a $CO_2$ emission calculation system, $CO_2$ emission calculation method, and a program that calculate $CO_2$ emissions related to logistics.

### Background

Conventionally, a system for calculating $CO_2$ emissions related to logistics has been disclosed, which estimates the travel distance of a vehicle used for delivering an item based on the vehicle registration number and calculates $CO_2$ emissions based on this travel distance (Patent Document 1). Additionally, a system has been disclosed, which calculates $CO_2$ emissions based on electricity consumed in a warehouse where an item is stored (Patent Document 2).

### Document in the existing art

Patent Document

Patent Document 1: JP2009-230740 A
Patent Document 2: JP2012-108691 A

### Summary

The technical problem solved by the disclosure

In recent years, there has been an increase in cases where a company that outsources merchandise logistics to a specialized vendor requests $CO_2$ reduction as part of the company's environmental measures. Therefore, it has become necessary to calculate $CO_2$ emissions first. However, since a specialized vendor handles logistics for multiple consignors, it has been difficult to accurately understand $CO_2$ emissions for each consignor.
Therefore, the present disclosure provides a $CO_2$ emission calculation system, a $CO_2$ emission calculation method, and a program that accurately calculate $CO_2$ emissions related to logistics for each consignor.

Solution for solving the technical problem

The present disclosure provides a $CO_2$ emission calculation system that calculates $CO_2$ emissions related to logistics, including: a first calculation unit that calculates $CO_2$ emissions based on a transportation cost for a material used for the logistics and an identifying unit that identifies a consignor that produced the calculated $CO_2$ emissions.
The present disclosure also provides the $CO_2$ emission calculation system, in which the first calculation unit calculates $CO_2$ emissions for each payment department that manages trade for the material, and the identifying unit identifies a consignor that produced the calculated $CO_2$ emissions based on department information containing the consignor assigned to each the payment department.
The present disclosure also provides the $CO_2$ emission calculation system, further including: a second calculation unit that calculates $CO_2$ emissions based on energy consumed by transportation of an item, a third calculation unit that calculates $CO_2$ emissions based on energy consumed by travel of an item in a warehouse site, and a fourth calculation unit that calculates $CO_2$ emissions based on energy consumed by management of the item in the warehouse site, in which the identifying unit identifies a consignor that produced the $CO_2$ emissions calculated by each of the calculation units.
The present disclosure also provides the $CO_2$ emission calculation system, in which the second calculation unit calculates $CO_2$ emissions for each the item, the third calculation unit calculates $CO_2$ emissions for each vehicle used in travel of the item, and the fourth calculation unit calculates $CO_2$ emissions for each recording department that recorded energy consumed by management of the item, the identifying unit identifies a consignor that produced $CO_2$ emissions calculated by the second calculation unit based on shipping information containing a consignor for each the item, identifies a consignor that produced $CO_2$ emissions calculated by the third calculation unit based on vehicle information containing a consignor for each the vehicle, and identifies a consignor that produced $CO_2$ emissions calculated by the fourth calculation unit based on recording department information containing a consignor for each the recording department assigned to the consignor.

The present disclosure also provides the $CO_2$ emission calculation system, in which the second calculation unit acquires information on the consumed energy from a device installed in a vehicle used for transportation of the item, and/or the third calculation unit acquires information on the consumed energy from a device installed in a vehicle used for travel of the item.

The present disclosure also provides the $CO_2$ emission calculation system, further including a display unit that displays $CO_2$ emissions produced at a base based on base information of the identified consignor.

The present disclosure also provides a $CO_2$ emission calculation method of executing a $CO_2$ emission calculation system that calculates $CO_2$ emissions related to logistics, including the steps of: calculating $CO_2$ emissions based on a transportation cost for a material used for the logistics and identifying a consignor that produced the calculated $CO_2$ emissions.

The present disclosure provides a program causing a $CO_2$ emission calculation system that calculates $CO_2$ emissions related to logistics to function as: a first calculation unit that calculates $CO_2$ emissions based on a transportation cost for a material used for the logistics; and an identifying unit that identifies a consignor that produced the calculated $CO_2$ emissions.

Technical effect

The present disclosure can accurately calculate $CO_2$ emissions related to logistics for each consignor.

**Brief description of the drawings**

FIG. 1 is a diagram explaining the overview of the $CO_2$ emission calculation system according to an Embodiment of the present disclosure.

FIG. 2 is a diagram showing the functional configuration of the $CO_2$ emission calculation device according to an embodiment of the present disclosure.

FIG. 3 is a flowchart of the $CO_2$ emission calculation process of the first calculation unit according to an embodiment of the present disclosure.

FIG. 4 is a diagram schematically showing trade information according to an embodiment of the present disclosure.

FIG. 5 is a flowchart of the $CO_2$ emission calculation process of the second calculation unit according to an embodiment of the present disclosure.

FIG. 6 is a diagram schematically showing ship notice information according to an embodiment of the present disclosure.

FIG. 7 is a flowchart of the $CO_2$ emission calculation process of the third calculation unit according to an embodiment of the present disclosure.

FIG. 8 is a diagram schematically showing operation information according to an embodiment of the present disclosure.

FIG. 9 is a flowchart of the $CO_2$ emission calculation process of the fourth calculation unit according to an embodiment of the present disclosure.

FIG. 10 is a diagram schematically showing electricity consumption information according to an embodiment of the present disclosure.

FIG. 11 is a flowchart of the $CO_2$ emission calculation process of the $CO_2$ emission calculation system according to an embodiment of the present disclosure.

FIG. 12 shows an example display on a consignor terminal according to an embodiment of the present disclosure.

**Detailed description of the embodiments**

Hereinafter, embodiments to carry out the present disclosure (hereinafter referred to as "Embodiments") are described below in detail with reference to the attached drawings. In the drawings, the same components throughout the description of Embodiments are designated by the same reference numerals.

Basic concept / Basic configuration

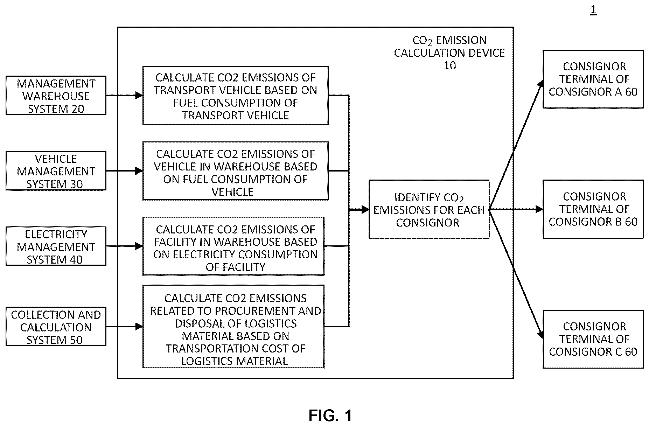

FIG. 1 is a diagram for explaining the overview of the $CO_2$ emission calculation system 1 according to an Embodiment of the present disclosure. As shown in FIG. 1, the $CO_2$ emission calculation system 1 includes a warehouse management system 20, a vehicle management system 30, an electricity management system 40, a collection and aggregation system 50, a $CO_2$ emission calculation device 10, and a consignor terminal 60. The consignor terminal 60 is a terminal for each consignor who assigns a logistics service. Although FIG. 1 shows three terminals 60: the consignor terminal 60 of the consignor A, the consignor terminal 60 of the consignor B, and the consignor terminal 60 of the consignor C. However, any number of terminals can be used as long as at least one terminal is used.

The $CO_2$ emission calculation device 10, the warehouse management system 20, the vehicle management system 30, the electricity management system 40, the collection and aggregation system 50, and the consignor terminal 60 are connected among each other through a network. In this Embodiment, the warehouse management system 20, the vehicle management system 30, the electricity management system 40, the collection and aggregation system 50, and the $CO_2$ emission calculation device 10 are each implemented as a cloud server, which may also be implemented on premises.

In this Embodiment, the $CO_2$ emission calculation device 10 is described as a separate device from the warehouse management system 20, the vehicle management system 30, the electricity management system 40, and the collection and aggregation system 50. However, the functions of the $CO_2$ emission calculation device 10, which will be described later, may be included in any of the warehouse management system 20, the vehicle management system 30, the electricity management system 40, or the collection and aggregation system 50, and the $CO_2$ emission calculation device 10 may be omitted.

"Warehouse management system" is abbreviated as WMS. The warehouse management system or WMS 20 manages receiving, inventory, and shipping of an item consigned by the consignor. The warehouse management system 20 records the ship notice information, which contains information related to transportation of a shipped item, and transmits this ship notice information to the $CO_2$ emission calculation device 10 periodically (e.g., once a month).

The vehicle management system 30 manages operation of a vehicle (e.g., forklift, towing vehicle) used in a warehouse site. The vehicle management system 30 records operation information, which contains the fuel consumption of a vehicle used in the warehouse site, and transmits this operation information to the $CO_2$ emission calculation device 10 periodically (e.g., once a month).

The electricity management system 40 manages electricity used for a warehouse facility. The electricity management system 40 records electricity consumption information, which contains electricity consumed by the warehouse facility, and transmits this electric consumption information to the $CO_2$ emission calculation device 10 periodically (e.g., once a month).

The collection and aggregation system 50 manages trade related to procurement and disposal of a material (e.g., packing material) used for logistics. The collection and aggregation system 50 records trade information, which contains a payment amount for a transportation fee related to procurement and disposal of a material used for logistics (hereinafter also referred to as "logistics material"), and transmits this trade information to the $CO_2$ emission calculation device 10 periodically (e.g., once a month).

The $CO_2$ emission calculation device 10 calculates $CO_2$ emissions related to logistics for each consignor. The $CO_2$ emissions related to logistics are the total of $CO_2$ emissions produced from transportation of an item, travel of an item in a warehouse, use of a warehouse facility, and processing for procurement or disposal of a material used for an item.

Specifically, the $CO_2$ emission calculation device 10 calculates $CO_2$ emissions from the amount of fuel consumed by a transport vehicle based on the ship notice information acquired from the warehouse management system 20. The $CO_2$ emission calculation device 10 also calculates $CO_2$ emissions from the amount of fuel consumed by a vehicle in a warehouse based on the operation information acquired from the vehicle management system 30. The $CO_2$ emission calculation device 10 also calculates $CO_2$ emissions from the amount of electricity consumed by a facility in a warehouse based on the electricity consumption information acquired from the electricity management system 40. The $CO_2$ emission calculation device 10 also calculates $CO_2$ emissions from the transportation cost of a logistics material based on the trade information acquired from the collection and aggregation system 50.

The $CO_2$ emission calculation device 10 identifies the consignor that produced each calculated $CO_2$ emissions and specifies the $CO_2$ emissions for each consignor. Then, the $CO_2$ emission calculation device 10 transmits the $CO_2$ emissions of a consignor to the consignor terminal 60.

Accordingly, the $CO_2$ emission calculation system can calculate $CO_2$ emissions produced from transportation of a material used for an item, $CO_2$ emissions produced from transportation of an item, $CO_2$ emissions produced from travel of an item in a warehouse, and $CO_2$ emissions produced from electricity consumed in a warehouse storing an item. Then, the $CO_2$ emission calculation system can identify the consignor that produced the calculated $CO_2$ emissions, allowing for accurate calculation of $CO_2$ emissions produced from logistics for each consignor.

Functional configuration

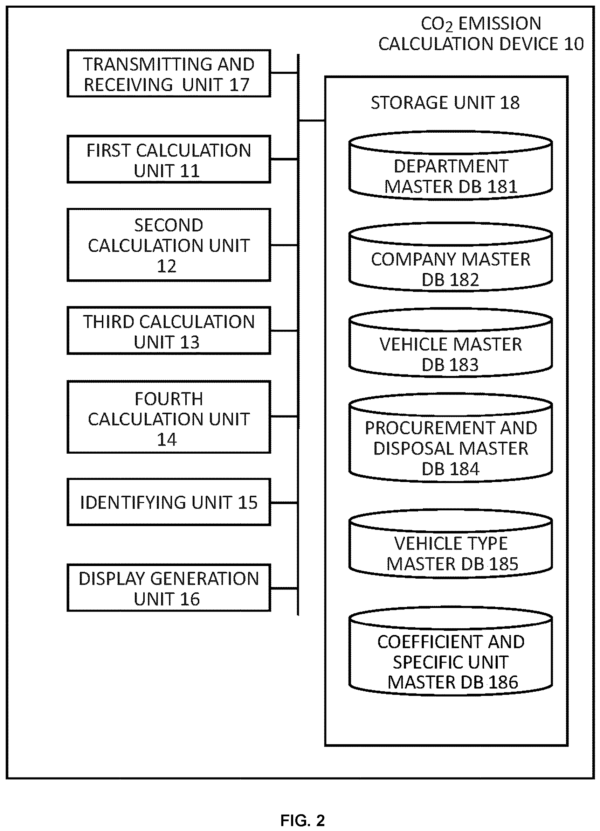

FIG. 2 is a diagram for explaining the functional configuration of the $CO_2$ emission calculation device 10 according to an Embodiment of the present disclosure. The $CO_2$ emission calculation device 10 includes a first calculation unit 11, a second calculation unit 12, a third calculation unit 13, a fourth calculation unit 14, an identifying unit 15, a display generation unit 16, a transmitting and receiving unit 17, and a storage unit 18.

The transmitting and receiving unit 17 transmits and receives data to and from the warehouse management system 20, the vehicle management system 30, the electricity management system 40, the collection and aggregation system 50, and the consignor terminal 60. In this Embodiment, since the $CO_2$ emission calculation device 10 is a cloud server, the storage unit 18 is composed of a cloud storage or a distributed ledger but may be composed of a hard disk, a semiconductor memory, a storage medium, a memory card, etc.

The first calculation unit 11 calculates $CO_2$ emissions produced from transportation related to procurement and disposal of a logistics material based on the transportation cost of the logistics material. The logistics material refers to a consumable necessary for an item, for example, packing material such as cardboard or cushioning material, string, and shipping tags. The transportation cost refers to a transportation cost generated when a logistics material is procured and disposed to and from a warehouse.

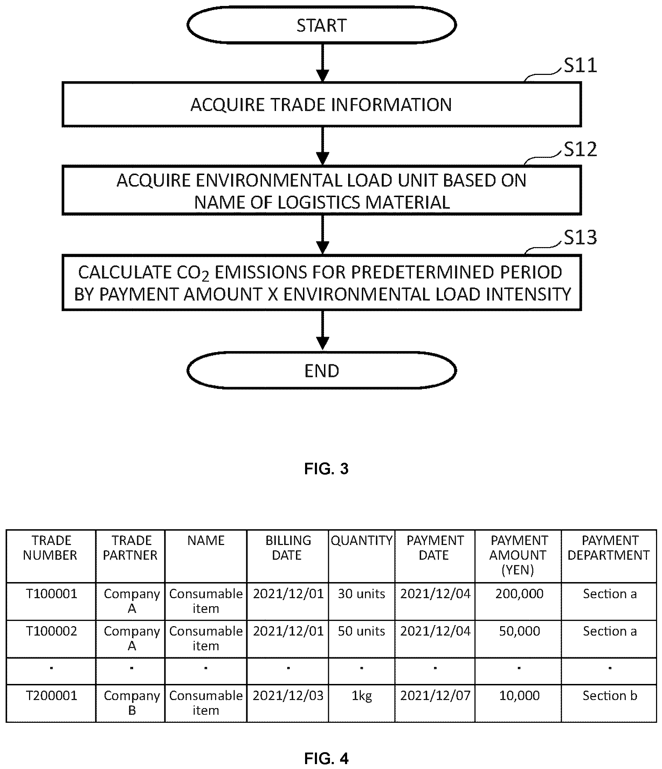

FIG. 3 shows the flow of the $CO_2$ emission calculation process of the first calculation unit 11 (hereinafter also referred to as "first calculation process") according to this Embodiment. The function of the first calculation unit 11 is explained in detail below with reference to FIG. 3 showing the first calculation process.

The first calculation unit 11 first acquires trade information of a logistics material from the collection and aggregation system 50 through the transmitting and receiving unit 17 (S11). FIG. 4 schematically shows trade information according to this Embodiment. The trade information contains information indicating a trade number identifying trade of a logistics material, a trade business partner, the name of a logistics material, a billing date for payment, the quantity of a logistics material, a payment date, a payment amount (yen), a payment department, etc., as shown in FIG. 4. The payment department is a section being in charge of payment of trade of a logistics material, and each paying department is assigned to a consignor.

Next, the first calculation unit 11 acquires an environmental load intensity from the procurement and disposal master database (hereinafter also referred to as "procurement and disposal master DB") 184 in the storage unit 18 based on the name of a logistics material in the acquired trade information (S12). The procurement and disposal master DB 184 is a database in which the name of a logistics material is recorded in association with an environmental load intensity. The procurement and disposal master DB is generated based on, for example, Embodied Energy and Emission Intensity Data for Japan Using Input-Output Tables (available from National Institute for Environmental Studies) and Joint guidelines on methods for calculating carbon dioxide emissions in the logistics sector Ver. 3.1 (available from Ministry of Economy and Trade and Industry and Ministry of Land, Infrastructure, Transport and Tourism).

Next, the first calculation unit 11 calculates $CO_2$ emissions produced from transportation related to procurement and disposal of a logistics material by a fee method. Specifically, the $CO_2$ emissions are calculated by multiplying the payment amount of the trade information for a predetermined period (e.g., one month), which is acquired in S11 by the environmental load intensity, which is acquired in S12 (S13). The calculated $CO_2$ emissions are associated with the payment department of the trade information.

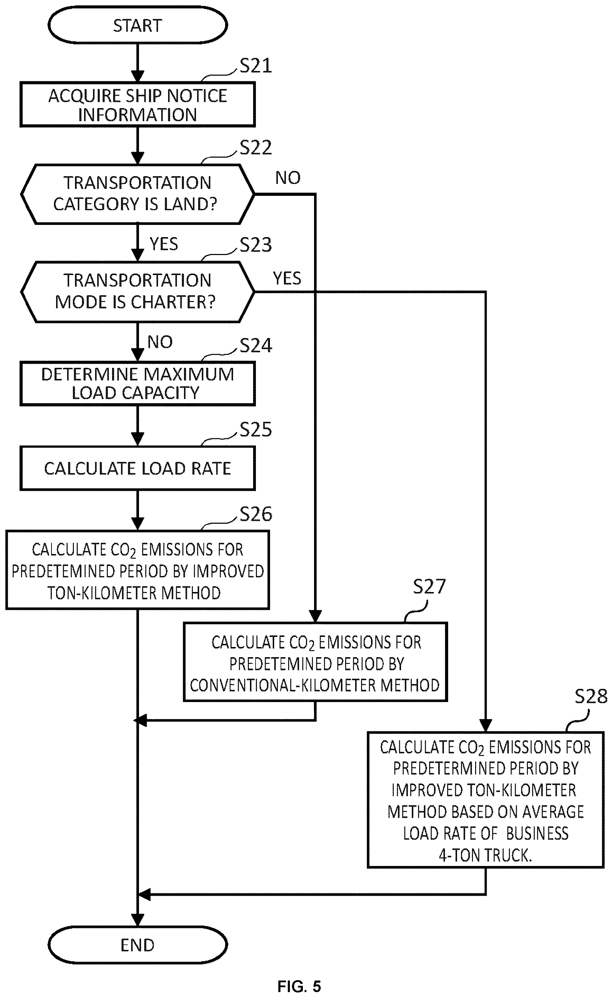

The second calculation unit 12 calculates $CO_2$ emissions produced from transportation of an item based on the fuel consumption of a transport vehicle transporting an item. The transport vehicle refers to a vehicle, a ship, a train, and an aircraft. FIG. 5 shows the flow of the $CO_2$ emission calculation process of the second calculation unit 12 (hereinafter also referred to as "second calculation process") according to this Embodiment. The function of the second calculation unit 12 is explained in detail below with reference to FIG. 5 showing the second calculation process.

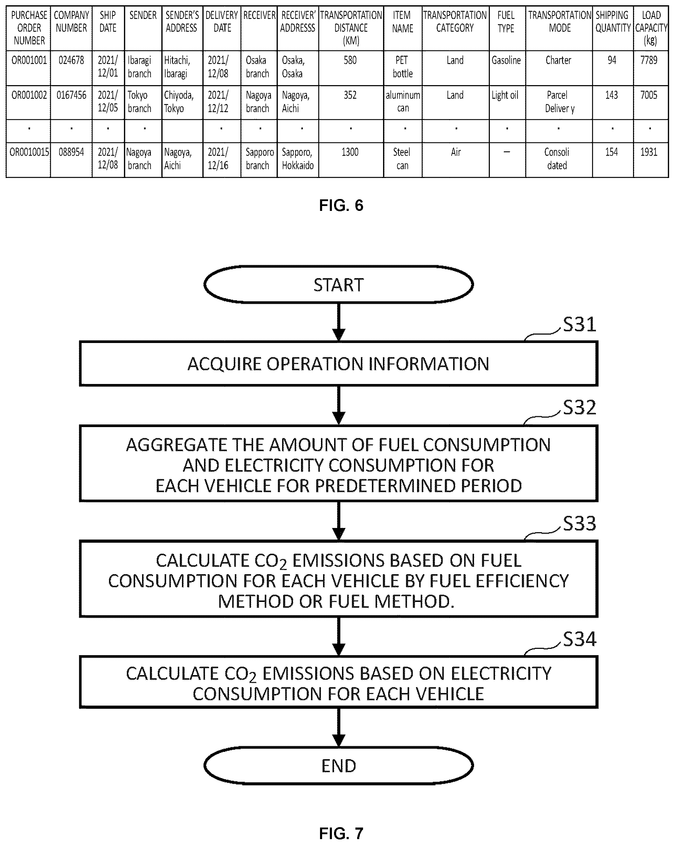

The second calculation unit 12 first acquires ship notice information from the warehouse management system 20 through the transmitting and receiving unit 17 (S21). FIG. 6 schematically shows ship notice information according to this Embodiment. The ship notice information contains information indicating a purchase order number identifying a purchase order, a company number identifying a consignor, the ship date of an ordered product, the sender of an ordered item, the address of a sender, the delivery date of an ordered item, the receiver of an ordered item, a receiver's address, the transportation distance from a sender to a receiver, the item name of an ordered item, a transportation category, the fuel type of a transport vehicle used for transportation, a transportation mode, a shipping quantity, a load capacity (kg), etc.

The transportation category refers to the type of transportation used for transporting an item, which is road, air, rail, or sea. The transportation mode refers to a transport method, which includes "charter," where a single transport vehicle is chartered to load and transport only the item of a specific consignor; "consolidated," where a single transport vehicle loads and transports the items of multiple consignors together; "route delivery", where a transport vehicle transports an item between companies through predetermined multiple bases and delivery routes; and "parcel delivery," where a transport vehicle transports an item from a company to a general consumer through predetermined multiple bases and delivery routes.

Next, the second calculation unit 12 judges whether or not the transportation category acquired in S21 is "road" (S22). If the transportation category is "road," the process proceeds to S23. On the other hand, if the transportation category is not "road," that is, if the transportation category is air, rail, or sea, the process proceeds to S27. Then, the second calculation unit 12 judges whether or not the transportation mode acquired in S21 is "charter" (S23). If the transportation mode is "charter," the process proceeds to S24. On the other hand, if the transportation mode is not "charter," that is, if the transportation mode is consolidated, route delivery, or parcel delivery, the process proceeds to S28.

Next, the second calculation unit 12 references the vehicle type master database (hereinafter also referred to as "vehicle type master DB") 185 stored in the storage unit 18, estimates the vehicle type based on the load capacity of the ship notice information, which is acquired in S21, and determines the maximum load capacity (S24). The vehicle type master DB 185 stores a load capacity in association with a vehicle type and the maximum load capacity of this vehicle type. Then, the second calculation unit 12 calculates the load rate of a transport vehicle by dividing the load capacity in the ship notice information, which is acquired in S21, by the maximum load capacity, which is acquired in S24 (S25).

Next, the second calculation unit 12 calculates $CO_2$ emissions for a predetermined period by using the improved ton-kilometer method (S26), which is one of the methods for calculating $CO_2$ emissions, based on the fuel type and the transportation distance in the ship notice information acquired in S21, the load rate calculated in S25, and the maximum load capacity determined in S24. Specifically, the second calculation unit 12 calculates $CO_2$ emissions for a predetermined period by using the formulas (1) and (2), which are calculation formulas for the improved ton-kilometer method based on the fuel type and the transportation distance in the ship notice information acquired in S21, the load rate calculated in S25, and the maximum load capacity determined in S24. The calculated $CO_2$ emissions are associated with the company number in the ship notice information.

As described above, the second calculation unit 12 acquires the transportation distance from the ship notice information in S26. However, if the ship notice information does not contain a transportation distance, the second calculation unit 12 references the distance master (not shown) previously provided in the storage unit 18 to acquire a transportation distance based on the ship notice information. The distance master is a database in which a transportation distance is associated with the transportation category, the sender's address, and the receiver's address in the ship notice information. The second calculation unit 12 selects a condition from the distance master to match or approximate the relationship among the transportation category, the sender's address, and the receiver's address in the ship notice information and then acquires this condition as a transportation distance.

$$CO_2 \text{ emissions } (t - CO_2) = \text{Transport ton kilometer (Ton-kilometer)} \times \text{Improved ton-kilometer method fuel consumption unit (l/Ton-kilometer)} \times \frac{1}{1000} \times \text{Unit calorific value } \left(\frac{GJ}{kl}\right) \times \text{Emission factor } \left(\frac{t-C}{GJ}\right) \times \frac{44}{12} \left(\frac{t-CO_2}{t-C}\right) \quad \text{••• Formula (1)}$$

$$\text{Transport ton kilometer} = \frac{\text{Load capacity (kg)}}{1000} \times \text{Transport distance} \quad \text{••• Formula (2)}$$

The improved ton-kilometer method fuel consumption unit is the amount of fuel used per transport ton-kilometer, which is acquired from the coefficient and specific unit master database (hereinafter also referred to as "coefficient and specific unit master DB") 186 based on the fuel type, a maximum load capacity, and a load rate. In the coefficient and specific unit master DB 186, the improved ton-kilometer method fuel consumption unit table, in which a specific unit is associated with a fuel type, a maximum load capacity, and a load rate. This table is generated based on the calculation method guideline for $CO_2$ emissions in the logistics sector by the Ministry of Economy, Trade and Industry and the Ministry of Land, Infrastructure, Transport and Tourism.

To determine the specific unit more accurately, values are substituted into the following formula (3) to calculate the specific unit.

In case of fuel type "light oil": $\ln y = 2.71 - 0.812 \ln(\frac{x}{100}) - 0.654 \ln z$

In case of fuel type "gasoline": $\ln y = 2.67 - 0.927 \ln(\frac{x}{100}) - 0.648 \ln z$

y: Fuel use per transport ton kilometer $\left(\frac{l}{t \cdot km}\right)$

x: Load rate (%)

z: Maximum load capacity ••• Formula (3)

The unit heating value, which is a heating value per unit amount, and the emission factor, which is a carbon emission amount per unit heating value, are acquired from the coefficient and specific unit master DB 186 based on a fuel type. The coefficient and specific unit master DB 186 stores a table in which a fuel type is associated with a unit heating value and an emission factor. This table is generated based on the Energy Conservation Act Notice and the Enforcement Order and Ordinance of the Act on Promotion of Global Warming Countermeasures.

Returning to FIG. 5, the second calculation unit 12 calculates $CO_2$ emissions for a predetermined period based on the transportation category, the load capacity, and the transportation distance in the ship notice information acquired in S21 by using the conventional ton-kilometer method, which is one of the methods for calculating $CO_2$ emissions (S27). Specifically, the second calculation unit 12 calculates $CO_2$ emissions for a predetermined period based on the transportation category, the load capacity, and the transportation distance in the ship notice information acquired in S21 by using the following formula (4) and the above-mentioned formula (2). The calculated $CO_2$ emissions are associated with the company number in the ship notice information.

$$CO_2 \text{ emissions } (t - CO_2) = \text{Transport ton kilometer (Ton-kilometer)} \times \text{Conventional ton-kilometer method } CO_2 \text{ emission intensity } (g - CO_2/\text{Ton-kilometer}) \times {}^{1}\!/_{1,000,000}$$

$$\left({}^{t-CO_2}\!/_{g-CO_2}\right) \qquad \bullet\bullet\bullet \text{ Formula (4)}$$

The conventional ton-kilometer method $CO_2$ emission intensity is a fuel use per transport ton kilometer, which is acquired from the coefficient and specific unit master DB 186 based on the transportation category. The coefficient and specific unit master DB 186 stores the conventional ton-kilometer method $CO_2$ emission intensity table, in which a transportation category is associated with a specific unit. This table is generated based on information on a vehicle, which is disclosed by the Ministry of Land, Infrastructure, Transport and Tourism and information on a railway, a vessel on a domestic route, and a domestic airline, which is disclosed by the Ministry of the Environment and the Ministry of Economy, Trade and Industry.

Returning to FIG. 5, the second calculation unit 12 calculates $CO_2$ emissions for a predetermined period based on a maximum load capacity of 4,000 kg and a load rate by using the above-mentioned improved ton-kilometer method (S28). Specifically, the second calculation unit 12 calculates $CO_2$ emissions for a predetermined period by using the formulas (1) and (2), which are calculation formulas for the improved ton-kilometer method based on the fuel type and the transportation distance in the ship notice information acquired in S21, a maximum load capacity of 4,000 kg, and a load rate of 62%. The calculated $CO_2$ emissions are associated with the company number in the ship notice information.

The third calculation unit 13 calculates $CO_2$ emissions produced from travel of an item in a warehouse based on fuel consumption of a vehicle used for travel of the item. FIG. 7 shows the flow of the $CO_2$ emission calculation process of the third calculation unit 13 (hereinafter also referred to as "third calculation process") according to this Embodiment. The function of the third calculation unit 13 is explained in detail below with reference to FIG. 7 showing the third calculation process.

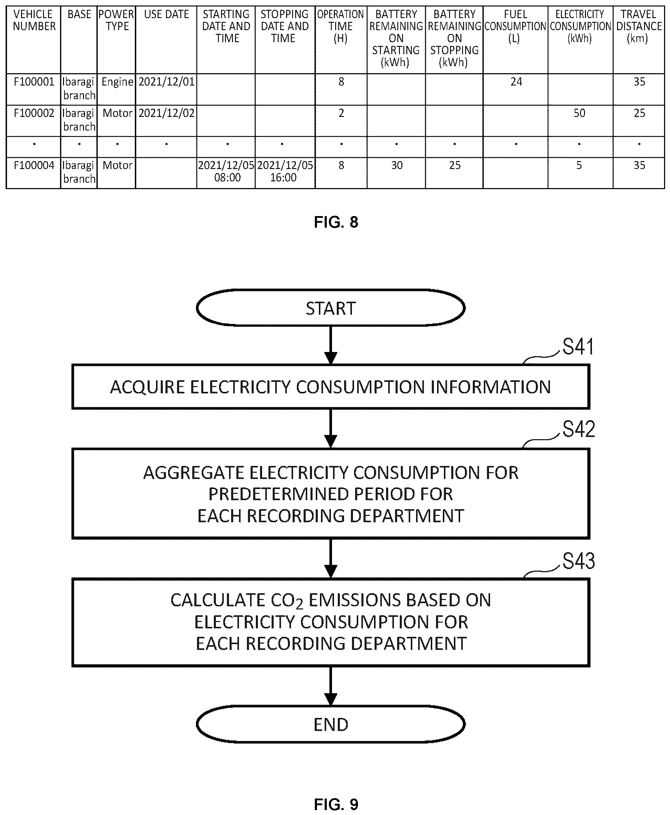

The third calculation unit 13 first acquires operation information from the vehicle management system 30 through the transmitting and receiving unit 17 (S31). FIG. 8 schematically shows operation information according to this Embodiment. The operation information contains information on a vehicle number for identifying a vehicle in a warehouse, the base of a vehicle, the power type of a vehicle, the use date of a vehicle, the starting date and time of a vehicle, the stopping date and time of a vehicle, an operating time, a battery remaining on starting (kWh), a battery remaining on stopping (kWh), a fuel consumption amount (L), an electricity consumption (kWh), a travel distance (km), etc.

The operation information may be manually input by a worker who has operated a vehicle or automatically input by connecting an ECU and a vehicle management device that are installed in a vehicle and connected with various sensors through a network. For the operation information that is manually input, a worker inputs a vehicle number, a base, a power type, a use date, an operating time, a fuel consumption amount (L), an electricity consumption (kWh), and a travel distance (km).

For the operation information automatically input, if the power type of a vehicle is an engine, the ECU provides the vehicle number, the base, the power type, the starting and the stopping dates and times acquired based on detection of an ignition key being turned ON/OFF, a fuel injection amount during the period after an ignition key is turned to ON until to OFF, and a travel distance (km). The vehicle management system 30 calculates an operating time based on the acquired starting and stopping dates and times, totals the fuel injection amount during the period after an ignition key is turned to ON until to OFF to calculate a fuel consumption, and combines this calculated fuel consumption with the acquired information to generate operation information.

If the power type of a vehicle is a motor, the ECU provides the vehicle number, the base, the power type, the starting and the stopping dates and times acquired based on detection of the switch being turned ON/OFF, and the travel distance (km). The vehicle management system 30 calculates the operation time based on the acquired starting and stopping dates and times, estimates the electricity consumption by multiplying the calculated operation time by the previously set rated output of the vehicle, and combines the estimated rated output with the acquired information to generate the operation information. If the vehicle is equipped with a measurement device for a battery remaining, the electricity consumption may be determined based on the remaining estimated from the voltage by this measurement device.

Returning to FIG. 7, the third calculation unit 13 aggregates fuel consumption and electricity consumption for each vehicle for a predetermined period based on the operation information acquired in S31 (S32). Next, the third calculation unit 13 calculates $CO_2$ emissions for each vehicle by using the fuel method, which is one of the methods for calculating $CO_2$ emissions, based on the fuel consumption aggregated in S32. Specifically, the third calculation unit 13 calculates $CO_2$ emissions based on the fuel consumption aggregated in S32 by using the following formula (5). The calculated $CO_2$ emissions are associated with the vehicle number in the operation information. The unit heating value and the emission factor are as described above.

For the operation information with unknown fuel consumption, the third calculation unit 13 calculates $CO_2$ emissions separately by using the fuel consumption method, which is one of the methods for calculating $CO_2$ emissions, based on the travel distance and the fuel efficiency, and then combines the calculated $CO_2$ emissions with those based on a fuel consumption (S33). Specifically, the third calculation unit 13 calculates $CO_2$ emissions based on the travel distance and the fuel efficiency by using the following formulas (5) and (6). The calculated $CO_2$ emissions are associated with the vehicle number in the operation information. For a fuel efficiency, a measured value or a fuel efficiency previously set according to the vehicle type and the maximum load capacity is used.

$$\text{CO}_2 \text{ emissions (t} - \text{CO}_2) = \text{Fuel consumption (kl)} \times \text{Unit calorific value } (^{GJ}/_{kl}) \times \text{Emission factor } (^{t-C}/_{GJ}) \times {^{44}/_{12}} \, (^{t-CO_2}/_{t-C}) \quad \bullet\bullet\bullet \text{ Formula (5)}$$

$$\text{Fuel consumption (kl)} = \dfrac{\text{Travel distance (km)}}{\text{Fuel efficirncy } (^{km}/_{l})} \times {^{1}/_{1000}}$$

$\bullet\bullet\bullet$ Formula (6)

Next, the third calculation unit 13 calculates $CO_2$ emissions by using the following formula (7) based on the electricity consumption aggregated in step S32. For the operation information with unknown electricity consumption, the third calculation unit 13 calculates $CO_2$ emissions separately by using the fuel efficiency method based on the travel distance and the fuel efficiency, and then combines the calculated $CO_2$ emissions with those based on the electricity consumption (S34). The calculated $CO_2$ emissions are associated with the vehicle number in the operation information.

$$\text{CO}_2 \text{ emissions (t} - \text{CO}_2) = \text{Electricity consumption (kWh)} \times \text{Emission factor } (^{t-C}/_{GJ})$$

$\bullet\bullet\bullet$ Formula (7)

The fourth calculation unit 14 calculates $CO_2$ emissions produced from management of an item in a warehouse based on electricity consumption of a facility in the warehouse. FIG. 9 is the flow of the $CO_2$ emission calculation process of the fourth calculation unit 14 (hereinafter also referred to as "fourth calculation process") according to this Embodiment. The function of the fourth calculation unit 14 is explained in detail below with reference to FIG. 9 showing the fourth calculation process.

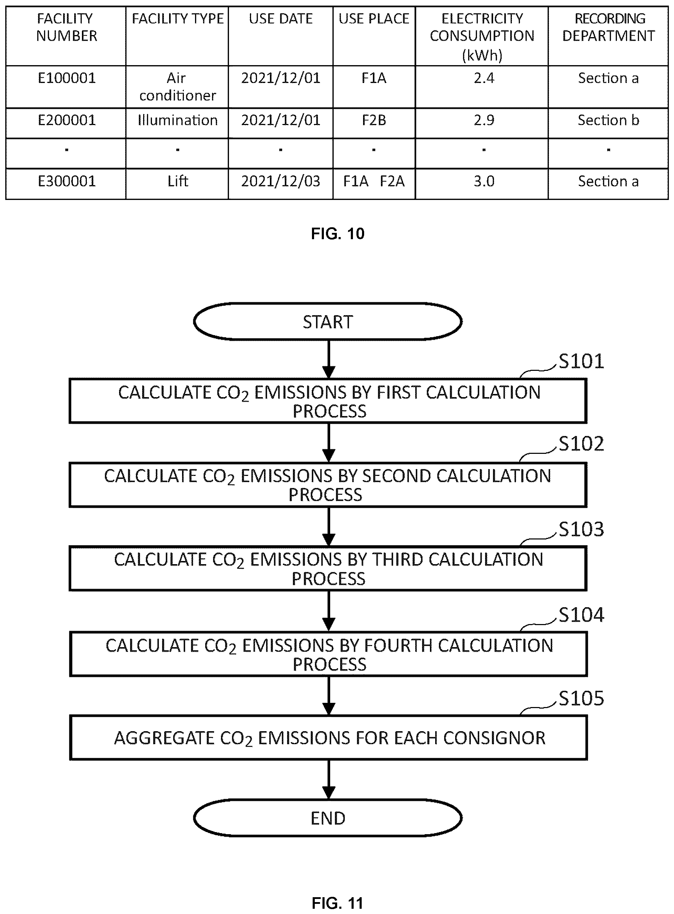

The fourth calculation unit 14 first acquires electricity consumption information from the electricity management system 40 through the transmitting and receiving unit 17 (S41). FIG. 10 schematically shows electricity consumption information according to this Embodiment. The electricity consumption information contains information on a facility number identifying a facility in a warehouse, a facility type indicating the type of a facility, the use date of a facility, the use location of a facility, the electricity consumption (kWh) of a facility, and a recording department. The recording department is a section that records electricity consumption information, and each recording department is assigned to a consignor.

Next, the fourth calculation unit 14 aggregates electricity consumption for a predetermined for each recording department based on the electricity consumption information acquired in S41 (S42). Then, the fourth calculation unit 14 calculates $CO_2$ emissions by using the above-mentioned formula (7) based on the electricity consumption aggregated in S42 (S43). The calculated $CO_2$ emissions are associated with the recording department in the operation information.

The identifying unit 15 identifies the consignor that produced the $CO_2$ emissions calculated by the first calculation unit 11, the second calculation unit 12, the third calculation unit 13, and the fourth calculation unit 14. Specifically, the identifying unit 15 references the $CO_2$ emissions calculated by the first calculation unit 11 and the department master database (hereinafter also referred to as "department master DB") 181 in which a payment department is recorded in association with a consignor assigned to the payment department, to identify the consignor.

The identifying unit 15 also references the $CO_2$ emissions calculated by the second calculation unit 12 and the company master database (hereinafter also referred to as "company master DB") 182 in which a company number is recorded in association with a consignor company, to identify the consignor. The identifying unit 15 also references the $CO_2$ emissions calculated by the third calculation unit 12 and the vehicle master database (hereinafter referred to as "vehicle master DB") 183 in which a vehicle number is recorded in association with a consignor company that owns the vehicle, to identify the consignor.

The identifying unit 15 also references the $CO_2$ emissions calculated by the fourth calculation unit 14 and the department master DB 181 in which a recording department is recorded in association with a consignor company assigned to the recording department, to identify the consignor.

The identifying unit 15 aggregates the $CO_2$ emissions for each consignor. The $CO_2$ emissions aggregated for each consignor are recorded in the storage unit 18.

The display generation unit 16 acquires the $CO_2$ emissions of a consignor from the storage unit 18 in response to a request from the consignor terminal 60, transmits the acquired $CO_2$ emissions through the transmitting and receiving unit 17 to the consignor terminal 60 to cause the consignor terminal 60 to display the transmitted $CO_2$ emissions.

The functional configuration of this system described above is merely an example, which may divide a single functional block (database and functional processing unit) or combine multiple functional blocks into a single functional block. Each functional processing unit is realized by a computer program stored in a storage device (storage unit) such as a ROM (Read Only Memory), a flash memory, an SSD (Solid State Drive), or a hard disk. The computer program (e.g., core software, an application causing a CPU to execute the above-mentioned various processes) is read out and executed by the CPU(Central Processing Unit). In other words, each functional processing unit is realized when the computer program reads and writes necessary data such as tables from a database (DB) stored in a storage device or a storage area on a memory. In some cases, each functional processing unit is realized by controlling the related hardware (e.g., input and output device, display device, communication interface device).

Process flow

The $CO_2$ emission calculation process of the $CO_2$ emission calculation system 1 according to an Embodiment of the present disclosure is explained below with reference to FIG. 11. This process is executed by the $CO_2$ emission calculation device 10.

The first calculation unit 11 executes the first calculation process shown in FIG. 3 based on the trade information for a predetermined acquired from the collection and aggregation system 50, calculates $CO_2$ emissions based on the transportation cost of a logistics material, and associates the calculated $CO_2$ emissions with the payment department (S101). Then, the second calculation unit 12 executes the second calculation process shown in FIG. 5 based on the ship notice information for a predetermined period acquired from the warehouse management system 20, calculates $CO_2$ emissions based on the fuel consumption of a transport vehicle transporting an item, and associates the calculated $CO_2$ emissions with the company number (S102).

Next, the third calculation unit 13 executes the third calculation process shown in FIG. 7 based on the operation information for a predetermined period acquired from the vehicle system 30, calculates $CO_2$ emissions based on the fuel consumption and the electricity consumption of a vehicle used for traveling an item in a warehouse, and associates the calculated $CO_2$ emissions with the vehicle number (S103). Next, the fourth calculation unit 14 executes the fourth calculation process shown in FIG. 9 based on the electricity consumption information for a predetermined period acquired from the electricity management system 40, calculates $CO_2$ emissions based on the electricity consumption of a facility in a warehouse, and associates the calculated $CO_2$ emissions with the recording department (S104).

Then, the identifying unit 15 identifies the consignor that produced the $CO_2$ emissions calculated in S101 to S104 and aggregates the $CO_2$ emissions for each consignor (S105). The aggregated $CO_2$ emissions are stored in the storage unit 18, and the $CO_2$ emissions of the consignor of a consignor terminal 60 are transmitted to the consignor terminal 60 in response to a request from the consignor terminal 60. The steps S101 to S104 may be performed in a different order or not simultaneously. Additionally, all the steps S101 to S104 are not necessarily performed.

As described above, the $CO_2$ emission calculation system can calculate $CO_2$ emissions produced from transportation of a material used for an item, $CO_2$ emissions produced from transportation of an item, $CO_2$ emissions produced from travel of an item in a warehouse, and $CO_2$ emissions produced from electricity consumed in a warehouse storing an item. Then, the $CO_2$ emission calculation system can identify the consignor that produced the calculated $CO_2$ emissions, allowing for accurate calculation of $CO_2$ emissions produced from logistics for each consignor. The calculated $CO_2$ emissions are presented to a consignor to visualize $CO_2$ emissions in logistics so that the consignor can be aware of reducing $CO_2$ emissions.

Modifications

(1) The CO$_2$ emission calculation device 10 may acquire a fuel consumption or a fuel efficiency and a travel distance directly from the ECU (Electronic Control Unit) of a vehicle not through the vehicle management system 30. The vehicle is equipped with multiple ECUs that control the engine, the instruments, etc. The ECUs record the fuel consumption, the fuel efficiency, and the travel distance, (in the case of an electric vehicle, the electricity consumption, the electricity efficiency, the travel distance), etc. The ECUs are intercommunicatively connected among each other through a CAN (Controller Area Network). The CAN is connected to a communication device that connects to the Internet, and the ECUs are connected to the CO$_2$ emission calculation device 10 through the communication device.

The vehicle is equipped with a GNSS (Global Navigation Satellite System), and the optimal route is searched and suggested based on the delivery plan output by a TMS (Transport Management System) when the driver sets a stopover and a destination. If the driver approves this route, the GNSS outputs a signal related to the approval to an ECU, and the ECU records this approval. When the current coordinates of the vehicle reach the stopover or the destination, the GNSS notifies other ECUs with a signal, and the ECUs record this notification.

When the vehicle finally arrives at the destination, the ECUs calculate and record the fuel consumption, the fuel efficiency, and the actual travel distance from the starting point to the stopover or the destination. The ECU transmits this recorded information to the CO$_2$ emission calculation device 10 through a communication device.

(2) The CO$_2$ emission calculation device 10 may calculate CO$_2$ emissions produced at a base based on consignor's base information and cause the consignor terminal 60 to display the calculated CO$_2$ emissions. Each of the department master DB 181, the company master DB 182, and the vehicle master DB 183 stores a company name and a base name in association with a department, a company number, and a vehicle number. The identifying unit 15 identifies the consignor and the consignor's base that produced the CO$_2$ emissions calculated by the first to fourth calculation units 11 to 14. Then, the identifying unit 15 aggregates the CO$_2$ emissions for each consignor's base.

This enables calculation of CO$_2$ emissions based on the fuel consumption of transport vehicles departing from the same base, the fuel consumption of vehicles belonging to this base, the electricity consumption at this base, and the transportation cost of consumables/waste at this base. Consequently, this enables calculation of the CO$_2$ emissions for each consignor's base.

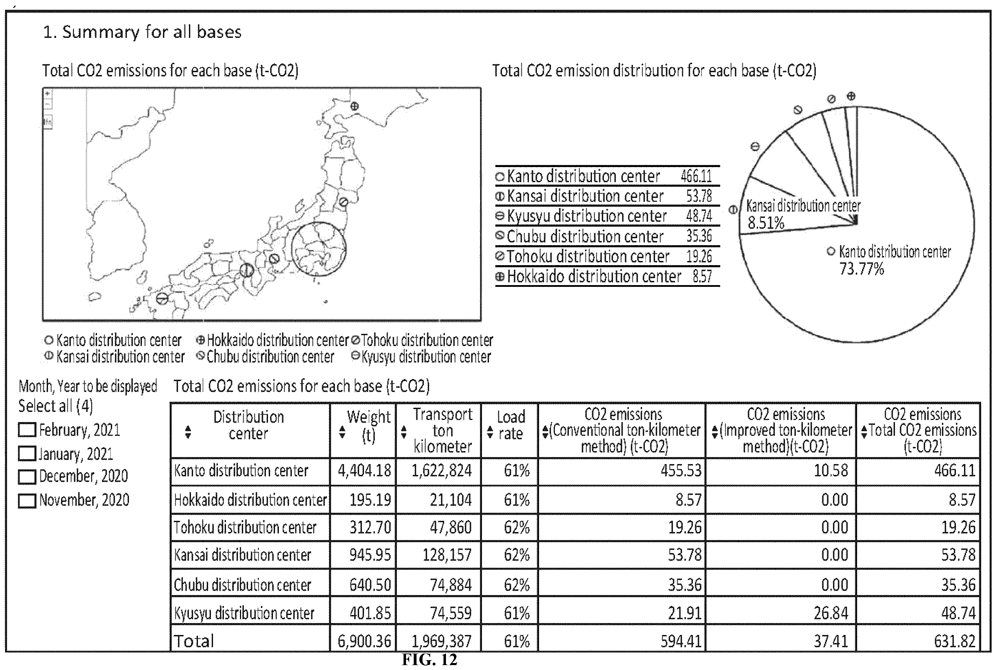

The display generation unit 16 generates a table based on the CO$_2$ emissions aggregated for each consignor's base by the identifying unit 15 and transmits this table to the consignor terminal 60. The display generation unit 16 also uses map information to generate a map that displays a circle centered on the coordinates of each location. The size of the circle corresponds to the CO$_2$ emissions. The display generation unit 16 then transmits the map to the consignor terminal 60. The display generation unit 16 may transmit both the above-mentioned table and map to the consignor terminal 60. FIG. 12 shows an example display on a consignor terminal 60.

(3) The second calculation unit 12 may take into account the fuel consumption of a vehicle for calculating the CO$_2$ emissions when the transport vehicle is a train. When the transport vehicle is a rail train, vehicles are used to transport an item from a sender to a rail station and from a station to a receiver. In this case, the CO$_2$ emissions can be calculated more accurately by taking into account the fuel consumption of the vehicles.

The present disclosure is described using the above-mentioned Embodiments, but the technical scope of the present disclosure is not limited to the scope described in these Embodiments. It is apparent to those skilled in the art that various modifications or improvements can be made to the above-mentioned Embodiments. Furthermore, it is clear from the description of the claims that such modified or improved embodiments can also be included within the technical scope of the present disclosure. In the above-mentioned Embodiments, the present disclosure is described as a disclosure of a product, specifically a CO$_2$ emission calculation system. However, in the present disclosure, it can also be regarded as a disclosure of a method executed by the CO$_2$ emission calculation system or as a program causing the CO$_2$ emission calculation to function as various means.

Description of reference numerals

1: CO$_2$ emission calculation system, 10: CO$_2$ emission calculation device, 11: first calculation unit, 12: second calculation unit, 13: third calculation unit, 14: fourth calculation unit, 15: identifying unit, 16: display generation unit, 17: transmitting and receiving unit, 18: storage unit, 181: department master DB, 182: company master DB, 183: vehicle master DB, 184: procurement and disposal master DB, 185: vehicle type master DB, 186: coefficient and specific unit master DB, 20: warehouse management system, 30: vehicle management system, 40: electricity management system, 50: collection and aggregation system, 60: consignor terminal.

**Claims**

1. A $CO_2$ emission calculation system that calculates $CO_2$ emissions related to logistics, comprising:

   a first calculation unit that calculates $CO_2$ emissions based on a transportation cost for a material used for the logistics; and
   an identifying unit that identifies a consignor that produced the calculated $CO_2$ emissions.

2. The $CO_2$ emission calculation system according to claim 1, wherein

   the first calculation unit calculates $CO_2$ emissions for each payment department that manages trade for the material, and
   the identifying unit identifies a consignor that produced the calculated $CO_2$ emissions based on department information containing the consignor assigned to each the payment department.

3. The $CO_2$ emission calculation system according to claim 1, further comprising:

   a second calculation unit that calculates $CO_2$ emissions based on energy consumed by transportation of an item,
   a third calculation unit that calculates $CO_2$ emissions based on energy consumed by travel of an item in a warehouse site; and
   a fourth calculation unit that calculates $CO_2$ emissions based on energy consumed by management of the item in the warehouse site, wherein
   the identifying unit identifies a consignor that produced the $CO_2$ emissions calculated by each of the calculation units.

4. The $CO_2$ emission calculation system according to claim 3, wherein

   the second calculation unit calculates $CO_2$ emissions for each the item,
   the third calculation unit calculates $CO_2$ emissions for each vehicle used in travel of the item,
   the fourth calculation unit calculates $CO_2$ emissions for each recording department that recorded energy consumed by management of the item, and
   the identifying unit identifies a consignor that produced $CO_2$ emissions calculated by the second calculation unit based on shipping information containing a consignor for each the item, identifies a consignor that produced $CO_2$ emissions calculated by the third calculation unit based on vehicle information containing a consignor for each the vehicle, and identifies a consignor that produced $CO_2$ emissions calculated by the fourth calculation unit based on recording department information containing a consignor assigned to each the recording department.

5. The $CO_2$ emission calculation system according to claim 3, wherein
   the second calculation unit acquires information on the consumed energy from a device installed in a vehicle used for transportation of the item, and/or the third calculation unit acquires information on the consumed energy from a device installed in a vehicle used for travel of the item.

6. The $CO_2$ emission calculation system according to claim 1, further comprising a display unit that displays $CO_2$ emissions produced at a base based on base information of the identified consignor.

7. A method of executing a $CO_2$ emission calculation system that calculates $CO_2$ emissions related to logistics, comprising the steps of:

   calculating $CO_2$ emissions based on a transportation cost for a material used for the logistics; and
   identifying a consignor that produced the calculated $CO_2$ emissions.

8. A program causing a $CO_2$ emission calculation system that calculates $CO_2$ emissions related to logistics to function as:

   a first calculation unit that calculates $CO_2$ emissions based on a transportation cost for a material used for the logistics; and
   an identifying unit that identifies a consignor that produced the calculated $CO_2$ emissions.

CO$_2$ EMISSION
CALCULATION DEVICE
10

1

MANAGEMENT
WAREHOUSE
SYSTEM 20

CALCULATE CO2 EMISSIONS OF
TRANSPORT VEHICLE BASED ON
FUEL CONSUMPTION OF
TRANSPORT VEHICLE

CONSIGNOR
TERMINAL OF
CONSIGNOR A 60

VEHICLE
MANAGEMENT
SYSTEM 30

CALCULATE CO2 EMISSIONS OF
VEHICLE IN WAREHOUSE BASED
ON FUEL CONSUMPTION OF
VEHICLE

IDENTIFY CO$_2$
EMISSIONS FOR EACH
CONSIGNOR

CONSIGNOR
TERMINAL OF
CONSIGNOR B 60

ELECTRICITY
MANAGEMENT
SYSTEM 40

CALCULATE CO2 EMISSIONS OF
FACILITY IN WAREHOUSE BASED
ON ELECTRICITY CONSUMPTION
OF FACILITY

COLLECTION AND
CALCULATION
SYSTEM 50

CALCULATE CO2 EMISSIONS
RELATED TO PROCUREMENT AND
DISPOSAL OF LOGISTICS
MATERIAL BASED ON
TRANSPORTATION COST OF
LOGISTICS MATERIAL

CONSIGNOR
TERMINAL OF
CONSIGNOR C 60

FIG. 1

CO2 EMISSION
CALCULATION DEVICE 10

TRANSMITTING AND
RECEIVING UNIT 17

FIRST CALCULATION
UNIT 11

SECOND
CALCULATION UNIT
12

THIRD CALCULATION
UNIT 13

FOURTH
CALCULATION UNIT
14

IDENTIFYING UNIT 15

DISPLAY GENERATION
UNIT 16

STORAGE UNIT 18

DEPARTMENT
MASTER DB 181

COMPANY MASTER
DB 182

VEHICLE MASTER
DB 183

PROCUREMENT AND
DISPOSAL MASTER
DB 184

VEHICLE TYPE
MASTER DB 185

COEFFICIENT AND
SPECIFIC UNIT
MASTER DB 186

FIG. 2

START

ACQUIRE TRADE INFORMATION ⟋S11

ACQUIRE ENVIRONMENTAL LOAD UNIT BASED ON NAME OF LOGISTICS MATERIAL ⟋S12

CALCULATE $CO_2$ EMISSIONS FOR PREDETERMINED PERIOD BY PAYMENT AMOUNT X ENVIRONMENTAL LOAD INTENSITY ⟋S13

END

**FIG. 3**

| TRADE NUMBER | TRADE PARTNER | NAME | BILLING DATE | QUANTITY | PAYMENT DATE | PAYMENT AMOUNT (YEN) | PAYMENT DEPARTMENT |
|---|---|---|---|---|---|---|---|
| T100001 | Company A | Consumable item | 2021/12/01 | 30 units | 2021/12/04 | 200,000 | Section a |
| T100002 | Company A | Consumable item | 2021/12/01 | 50 units | 2021/12/04 | 50,000 | Section a |
| . | . | . | . | . | . | . | . |
| T200001 | Company B | Consumable item | 2021/12/03 | 1kg | 2021/12/07 | 10,000 | Section b |

**FIG. 4**

START

S21
ACQUIRE SHIP NOTICE
INFORMATION

S22
TRANSPORTATION
CATEGORY IS LAND? —NO

YES S23
TRANSPORTATION
MODE IS CHARTER? —YES

NO S24
DETERMINE MAXIMUM
LOAD CAPACITY

S25
CALCULATE LOAD RATE

S26
CALCULATE $CO_2$ EMISSIONS FOR
PREDETEMINED PERIOD BY IMPROVED
TON-KILOMETER METHOD

S27
CALCULATE $CO_2$ EMISSIONS FOR
PREDETEMINED PERIOD BY
CONVENTIONAL-KILOMETER METHOD

S28
CALCULATE $CO_2$ EMISSIONS FOR
PREDETERMINED PERIOD BY
IMPROVED TON-KILOMETER
METHOD BASED ON AVERAGE
LOAD RATE OF BUSINESS
4-TON TRUCK.

END

FIG. 5

| PURCHASE ORDER NUMBER | COMPANY NUMBER | SHIP DATE | SENDER | SENDER'S ADDRESS | DELIVERY DATE | RECEIVER | RECEIVER' ADDRESSS | TRANSPORTATION DISTANCE (KM) | ITEM NAME | TRANSPORTATION CATEGORY | FUEL TYPE | TRANSPORTATION MODE | SHIPPING QUANTITY | LOAD CAPACITY (kg) |
|---|---|---|---|---|---|---|---|---|---|---|---|---|---|---|
| OR001001 | 024678 | 2021/ 12/01 | Ibaragi branch | Hitachi, Ibaragi | 2021/ 12/08 | Osaka branch | Osaka, Osaka | 580 | PET bottle | Land | Gasoline | Charter | 94 | 7789 |
| OR001002 | 0167456 | 2021/ 12/05 | Tokyo branch | Chiyoda, Tokyo | 2021/ 12/12 | Nagoya branch | Nagoya, Aichi | 352 | aluminum can | Land | Light oil | Parcel Delivery | 143 | 7005 |
| . | . | . | . | . | . | . | . | . | . | . | . | . | . | . |
| OR0010015 | 088954 | 2021/ 12/08 | Nagoya branch | Nagoya, Aichi | 2021/ 12/16 | Sapporo branch | Sapporo, Hokkaido | 1300 | Steel can | Air | — | Consoli dated | 154 | 1931 |

FIG. 6

```
                    START
                      |
                      v
   ACQUIRE OPERATION INFORMATION            S31
                      |
                      v
   AGGREGATE THE AMOUNT OF FUEL CONSUMPTION  S32
   AND ELECTRICITY CONSUMPTION FOR
   EACH VEHICLE FOR PREDETERMINED PERIOD
                      |
                      v
   CALCULATE CO2 EMISSIONS BASED ON FUEL     S33
   CONSUMPTION FOR EACH VEHICLE BY FUEL EFFICIENCY
   METHOD OR FUEL METHOD.
                      |
                      v
   CALCULATE CO2 EMISSIONS BASED ON ELECTRICITY  S34
   CONSUMPTION FOR EACH VEHICLE
                      |
                      v
                    END
```

FIG. 7

| VEHICLE NUMBER | BASE | POWER TYPE | USE DATE | STARTING DATE AND TIME | STOPPING DATE AND TIME | OPERATION TIME (H) | BATTERY REMAINING ON STARTING (kWh) | BATTERY REMAINING ON STOPPING (kWh) | FUEL CONSUMPTION (L) | ELECTRICITY CONSUMPTION (kWh) | TRAVEL DISTANCE (km) |
|---|---|---|---|---|---|---|---|---|---|---|---|
| F100001 | Ibaragi branch | Engine | 2021/12/01 | | | 8 | | | 24 | | 35 |
| F100002 | Ibaragi branch | Motor | 2021/12/02 | | | 2 | | | | 50 | 25 |
| . | . | . | . | . | . | . | . | . | . | . | . |
| F100004 | Ibaragi branch | Motor | | 2021/12/05 08:00 | 2021/12/05 16:00 | 8 | 30 | 25 | | 5 | 35 |

FIG. 8

START

ACQUIRE ELECTRICITY CONSUMPTION INFORMATION — S41

AGGREGATE ELECTRICITY CONSUMPTION FOR PREDETERMINED PERIOD FOR EACH RECORDING DEPARTMENT — S42

CALCULATE $CO_2$ EMISSIONS BASED ON ELECTRICITY CONSUMPTION FOR EACH RECORDING DEPARTMENT — S43

END

FIG. 9

| FACILITY NUMBER | FACILITY TYPE | USE DATE | USE PLACE | ELECTRICITY CONSUMPTION (kWh) | RECORDING DEPARTMENT |
|---|---|---|---|---|---|
| E100001 | Air conditioner | 2021/12/01 | F1A | 2.4 | Section a |
| E200001 | Illumination | 2021/12/01 | F2B | 2.9 | Section b |
| . | . | . | . | . | . |
| E300001 | Lift | 2021/12/03 | F1A  F2A | 3.0 | Section a |

FIG. 10

START

CALCULATE $CO_2$ EMISSIONS BY FIRST CALCULATION PROCESS — S101

CALCULATE $CO_2$ EMISSIONS BY SECOND CALCULATION PROCESS — S102

CALCULATE $CO_2$ EMISSIONS BY THIRD CALCULATION PROCESS — S103

CALCULATE $CO_2$ EMISSIONS BY FOURTH CALCULATION PROCESS — S104

AGGREGATE $CO_2$ EMISSIONS FOR EACH CONSIGNOR — S105

END

FIG. 11

# 1. Summary for all bases

**Total CO2 emissions for each base (t-CO2)**

| | | |
|---|---|---|
| ○ Kanto distribution center | 466.11 |
| ⊕ Kansai distribution center | 53.78 |
| ⊖ Kyusyu distribution center | 48.74 |
| ⊘ Chubu distribution center | 35.36 |
| ⊘ Tohoku distribution center | 19.26 |
| ⊕ Hokkaido distribution center | 8.57 |

○ Kanto distribution center   ⊕ Hokkaido distribution center  ⊘ Tohoku distribution center
⊕ Kansai distribution center  ⊘ Chubu distribution center   ⊖ Kyusyu distribution center

**Total CO2 emission distribution for each base (t-CO2)**

⊕ Kansai distribution center 8.51%

○ Kanto distribution center 73.77%

Month, Year to be displayed
Select all (4)
☐ February, 2021
☐ January, 2021
☐ December, 2020
☐ November, 2020

**Total CO2 emissions for each base (t-CO2)**

| Distribution center ⬍ | Weight (t) ⬍ | Transport ton kilometer ⬍ | Load rate ⬍ | CO2 emissions ⬍ (Conventional ton-kilometer method) (t-CO2) | CO2 emissions ⬍ (Improved ton-kilometer method)(t-CO2) | CO2 emissions ⬍ Total CO2 emissions (t-CO2) |
|---|---|---|---|---|---|---|
| Kanto distribution center | 4,404.18 | 1,622,824 | 61% | 455.53 | 10.58 | 466.11 |
| Hokkaido distribution center | 195.19 | 21,104 | 61% | 8.57 | 0.00 | 8.57 |
| Tohoku distribution center | 312.70 | 47,860 | 62% | 19.26 | 0.00 | 19.26 |
| Kansai distribution center | 945.95 | 128,157 | 62% | 53.78 | 0.00 | 53.78 |
| Chubu distribution center | 640.50 | 74,884 | 62% | 35.36 | 0.00 | 35.36 |
| Kyusyu distribution center | 401.85 | 74,559 | 61% | 21.91 | 26.84 | 48.74 |
| Total | 6,900.36 | 1,969,387 | 61% | 594.41 | 37.41 | 631.82 |

**FIG. 12**

## INTERNATIONAL SEARCH REPORT

| International application No. |
| --- |
| **PCT/JP2022/019246** |

**A. CLASSIFICATION OF SUBJECT MATTER**

*G06Q 50/30*(2012.01)i
FI:   G06Q50/30

According to International Patent Classification (IPC) or to both national classification and IPC

**B. FIELDS SEARCHED**

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2017-126227 A (FUJITSU LTD.) 20 July 2017 (2017-07-20)<br>paragraphs [0011], [0034], [0048]-[0066], [0090]-[0095], [0119]-[0124], [0141]-[0147], [0157], [0168], [0174]-[0175] | 1-8 |
| Y | 木村徹, いますぐ現場で役立つ物流実務のノウハウ, 第1版第1刷, SHUWA SYSTEM CO., LTD. 25 April 2012, pages 220-222, (1st edition, 1st printing), non-official translation (KIMURA, Toru. Practical know-how in logistics that is immediately useful on-site.)<br>page 221, line 2 to page 222, line 13 | 1-8 |
| Y | JP 2007-207140 A (MATSUSHITA ELECTRIC IND. CO., LTD.) 16 August 2007 (2007-08-16)<br>paragraphs [0001]-[0005], [0008], [0010]-[0013], [0023], [0034]-[0037], [0043]-[0058], [0065], [0078] | 3-4 |
| Y | JP 2010-191832 A (HITACHI, LTD.) 02 September 2010 (2010-09-02)<br>paragraphs [0001]-[0006], [0014]-[0022], [0025]-[0026], [0041]-[0043], [0049] | 3-4 |
| Y | JP 2016-126372 A (NIPPON TELEGR. & TELEPH. CORP.) 11 July 2016 (2016-07-11)<br>paragraphs [0002]-[0006] | 3-4 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 July 2022** | **26 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/019246**

| Patent document cited in search report | | | Publication date (day/month/year) | Patent family member(s) | Publication date (day/month/year) |
|---|---|---|---|---|---|
| JP | 2017-126227 | A | 20 July 2017 | (Family: none) | |
| JP | 2007-207140 | A | 16 August 2007 | (Family: none) | |
| JP | 2010-191832 | A | 02 September 2010 | (Family: none) | |
| JP | 2016-126372 | A | 11 July 2016 | (Family: none) | |

Form PCT/ISA/210 (patent family annex) (January 2015)

**EP 4 510 071 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009230740 A
- JP 2012108691 A